Europäisches Patentamt
European Patent Office
Office européen des brevets

(19)

(11) Publication number: **0 320 142 A2**

(12) **EUROPEAN PATENT APPLICATION**

(21) Application number: **88311054.6**

(51) Int. Cl.4: **C08G 75/02**

(22) Date of filing: **23.11.88**

(30) Priority: **27.11.87 JP 297730/87**

(43) Date of publication of application: **14.06.89 Bulletin 89/24**

(84) Designated Contracting States: **BE CH DE FR GB IT LI NL**

(71) Applicant: **Tosoh Corporation**
**4560, Oaza Tonda**
**Shinnanyo-shi Yamaguchi-ken(JP)**

Applicant: **Toso Susteel Co., Ltd.**
**7-7, Akasaka 1-chome**
**Minato-Ku Tokyo(JP)**

(72) Inventor: **Inoue, Hiroshi**
**5-8 Betsumei 3-chome**
**Yokkaichi-shi Mie-ken(JP)**
Inventor: **Kato, Toshikazu**
**5-1 Betsumei 3-chome**
**Yokkaichi-shi Mie-ken(JP)**
Inventor: **Ogawara, Kensuke**
**9-30 Betsumei 6-chome**
**Yokkaichi-shi Mie-ken(JP)**

(74) Representative: **Kearney, Kevin David Nicholas et al**
**KILBURN & STRODE 30 John Street**
**London, WC1N 2DD(GB)**

(54) **Preparation of poly (arylene sulfide).**

(57) There is provided an improved process for producing poly (arylene sulphide) with an increased molecular weight as compared with that achieved by the conventional processes.

In the process, when the dihaloaromatic compound has been converted to the extent of 70-98 mole %, a lithium halide is introduced in a specified proportion and the moisture content in the reaction system is controlled within a specified range, and the polymerization is thereafter allowed to proceed further.

The product polymer has an increased molecular weight and excellent linearity and is suitable for use in various molding applications.

EP 0 320 142 A2

# PREPARATION OF POLY (ARYLENE SULPHIDE)

This invention relates to an improved process for preparing poly (arylene sulphide) and in particular to preparation of poly (arylene sulphide) with an increased molecular weight.

Poly (arylene sulphide) materials, a typical example of which is poly (phenylene sulphide), exhibit excellent heat and chemical resistance properties and, hence, have attracted a good deal of attention as materials useful for producing articles such as parts in electrical and electronic instruments and automotive parts, and as materials for coating subtrates, in particular metallic substrates. Poly (arylene sulphide) materials may be formed or molded, for example, by injection molding or extrusion molding techniques, into various articles, such as moldings, films, sheets, fibres, filaments, etc. These products have been used in fields where high heat and chemical resistance properties are required.

A method of production of poly (arylene sulphide) is disclosed in Japanese Patent Publication (KOKOKU) No. 45-3368, which method comprises reacting a dihaloaromatic compound with an alkali metal sulphide such as sodium sulphide in a polar aprotic organic solvent such as N-methyl pyrrolidone. However, generally the polymer produced by this method has a molecular weight of such a low level that the polymer produced is unsuitable for use in molding or forming applications such as injection molding. In order to make the polymer suitable for use in molding or forming applications, it has been proposed to subject the low molecular weight polymer to thermal oxidation crosslinking treatment so as to increase the molecular weight. However, the polymer having this increased molecular weight as a result of the thermal oxidation treatment tends to exhibit poor extrusion workability, possibly due to the significant degree of cross-linking and/or branching caused by the treatment, so that it is difficult to form such finished products as films, filaments and fibres therefrom.

Several polymerization methods have therefore been proposed with a view to producing poly (arylene sulphide) having an increased molecular weight. A typical method is disclosed in Japanese Patent Publication (KOKOKU) No. 52-12240, in which method the polymerization is effected in the presence of a polymerization assistant R-COOM (wherein R is a hydrocarbyl group and M is an alkali metal), for example, lithium acetate. The resulting polymer having the thus increased molecular weight appears to exhibit good extrudability and to be utilizable in the manufacture of films, filaments, fibres and the like. However, the polymerization assistant in this method is rquired to be employed in a molar proportion substantially the same as that of the reactant alkali metal sulphide (e.g. sodium sulphide) used. Further, lithium acetate, which is one of the polymerization assistants most effective in increasing the molecular weight of the product polymers is very expensive and will greatly add to the production cost of polymers, so the method is not beneficial to industry. A further problem occurring in the operation of this method is that, since the polymerization is carried out with a significantly large proportion of the organic acid salt (water ted with the organic acid salt and is likely to give rise to problems of environmental pollution if discharged in that state. Removal of the contaminant salt from the effluent before discharging it would be very expensive.

USP No. 4,038,263 describes use of lithium halides as a polymerization assistant in the production of poly (arylene sulphide). The use of lithium halides may solve the above-discussed problems of environmental pollution and effluent treatment, but is less effective in increasing the molecular weight of the product polymer as compared with the case where other assistants such as lithium acetate are employed. Therefore, in order to obtain a product polymer having an increased molecular weight, it would be necessary to additionally use a cross-linking agent, a typical example of which is a polyhaloaromatic compound containing 3 or more halogen atoms in the molecule, as disclosed in Japanese Patent Publication (KOKOKU) No. 54-8719. This would make the practical operation undesirably complicated. It is also pointed out that where a lithium halide assistant is employed, a further problem arises in that the polymer tends to stick heavily on the inner wall of the polymerization vessel.

Accordingly, the present invention provides an improved process for producing a poly (arylene sulphide) resin having a suitably raised molecular weight.

Further, the invention provides such a process which is substantially free from the difficulties experienced with or involved in the prior art processes.

Thus, the present invention comprises a process processes.

Thus, the present invention comprises a process for producing a poly (arylene sulphide) comprising reacting a dihaloaromatic compound with an alkali metal sulphide in a polar aprotic solvent, wherein when a conversion of from 70 to 98 mole % of the dihaloaromatic compound has been achieved in the reaction system, a lithium halide is added in a proportion of from 0.1 to 3 moles per mole of the charged i.e. originally added dihaloaromatic compound and the moisture content in the reaction system is regulated to a level of from 2 to 8 moles of $H_2O$ per mole of the lithium halide and, thereafter, the reaction is allowed to

proceed.

As mentioned above, if the lithium halide is initially present in the polymerization reaction system, the molecular weight of the product polymer will be only slightly increased, i.e. to a lesser extent than that achieved with a lithium acetate assistant. Further, the product polymer produced in such a case tends to disadvantageously stick on the inner wall of the reactor.

Surprisingly, however, we have found that an increased molecular weight can be achieved without creating the problem of sticking if a lithium halide is added to the reaction system after the polymerization has been permitted to proceed to a certain extent and also if the moisture content of the reaction system is adjusted to a certain level. The present invention is based on and has been developed from these findings. The invention will be described below in more detail.

Examples of the lithium halides which may be used in the present process include lithium chloride, bromide and iodide and mixtures thereof. The chloride preferably 0.2 to 2 moles per mole of the originally added dihaloaromatic reactant. If the lithium halide is used in a proportion of less than 0.1 mole on the same basis, the molecular weight of the polymer cannot be easily increased to a desirable level. On the other hand, if the lithium halide is used in excess of 3 moles on the same basis, heavy resistance to agitation or stirring of the reaction mixture will be experienced during the process.

The most desirable time for introduction of the lithium halide into the reaction system is when the dihaloaromatic compound has been converted to the extent of 70 to 98 mole %. If the lithium halide is added when the conversion is still below 70%, a significant increase in the molecular weight of the product polymer is not achieved, the results being similar to those obtained with the prior art process in which lithium chloride is added at the initial polymerization stage. If the lithium halide is added at a time when conversion has proceeded beyond 98 mole % of the dihaloaromatic reactant, the molecular weight of the product polymer is not increased any further to any significant degree, even if the polymerization is allowed to continue. More preferably, the lithium chloride is added at a point where conversion of 90 to 97 mole % of the dihaloaromatic compound has occurred.

In this context, the term "conversion of dihaloaromatic compound" means a value calculated in accordance with the following equation:

Conversion (%) = 100 - [(unreacted DHAr; moles -excess DHAr: moles - AMS lost upon dehydration: moles)/charged DHAr: moles] x 100

wherein, DHAr represents a dihaloaromatic compound, AMS represents an alkali metal sulphide, "excess DHAr" represents a stoichiometrically excess amount of DHAr with respect to the alkali metal sulphide where the former is charged in excess of the latter, and "AMS lost upon dehydration" represents the moles of AMS which are decomposed into hydrogen sulphide in the polar aprotic solvent and lost from the reaction system when the reaction mixture is subjected to the moisture regulation treatment by dehydration during the process.

Thus the percentage conversion is 100% minus the amount of unreacted DHAr in moles minus the amount of DHAr which was added in excess of the alkali metal sulphide again expressed as moles minus the amount of AMS decomposed into hydrogen sulphide in the polar aprotic solvent and lost from the reaction system when the reactions mixture is subjected to moisture regulation by dehydration during the process, the amount of AMS lost upon dehydration again being expressed in moles and this sum being divided by the amount of DHAr originally added, again expressed in moles, the total sum being multiplied by 100.

After addition of the lithium halide, the moisture content in the reaction system is preferably regulated or adjusted to a level of from 2 to 8 moles of $H_2O$ per mole of the added lithium halide. If the moisture content is less than 2 moles per mole of the lithium halide, it is impossible to achieve an acceptable level of increase in the molecular weight of the product polymer. On the other hand, if the moisture content is in excess of 8 moles, not only does the molecular weight of the polymer fail to increase to an acceptable level, but also a disadvantageously high pressure is generated in the reactor. More preferably, the moisture content should be adjusted to a level of 3 to 7 moles of $H_2O$ per mole of the added lithium halide.

Examples of alkali metal sulphides which may be used in the invention include sulphides of lithium, sodium, potassium, rubidium and cesium and mixtures thereof. The alkali metal sulphide may be prepared e.g. in situ by reacting an alkali metal hydrosulphide with an alkali metal base or reacting hydrogen sulphide with an alkali metal base. In the present process, the alkali metal sulphide may be formed in situ prior to introduction of the dihaloaromatic compound into the reaction system. Of course, the sulphide may be prepared outside the reaction system and then introduced to the system. Of the above-listed alkali metal sulphides, sodium sulphide is the most desirable for use in the process.

The residual water content in the system is preferably in the range of 0.3 to 5.0 moles of $H_2O$ per mole of the alkali metal sulphide.

Examples of dihaloaromatic compounds which may be employed in the invention include o-, m- and p-dichlorobenzenes; p-dibromo- and p-di-iodo-benzenes; dichloro- and dibromo-naphthalenes; dichlorodiphenyl sulphone, dichlorobenzophenone, dichlorodiphenyl ether, dichlorodiphenyl sulphide, dichloro- and dibromodiphenyls, dichlorodiphenyl sulphoxide and mixtures thereof. Preferably, p-dihalobenzenes, in particular p-dichlorobenzene are employed.

Provided that the linearity of the polymer is not significantly disturbed, a minor proportion of other polyhaloaromatic compounds, for example, trichlorobenzenes, tribromobenzenes, tri-iodobenzenes, tetrachlorobenzenes, trichloronaphthalenes, tetrachloronaphthalenes, etc. and mixtures thereof may be used in addition to the dihaloaromatic component employed in the process.

The solvent in which the present polymerization is effected is preferably a polar solvent, in particular an aprotic solvent, which polar solvent must be stable when exposed to alkalis at high temperatures. Examples of the polymerization solvents which may be used in the invention include N,N-dimethyl acetamide, N,N-dimethyl formamide, hexamethyl-phosphoric triamide, N-methyl-ε-caprolactam, N-methyl or ethyl-2-pyrrolidone, 1,3-dimethyl imidazolidinone, dimethylsulphoxide, sulpholanes and tetramethyl urea and mixtures thereof.

The polymerization is effected with stirring at a temperature in the range of 200 to 300° C, preferably 200 to 270° C, for a period of 0.5 to 30 hours, e.g. 1 to 15 hours. In order to establish the precise time at which the lithium halide is to be introduced into the reaction system, it is recommended that the reaction temperature used prior to the introduction of lithium halide be in a relatively low range of 200 to 250° C so that the conversion of the dihaloaromatic compound may proceed in a well controlled and stable state.

The relative proportions of the dihaloaromatic compound and the alkali metal sulphide used in the process are preferably in the range of 0.95 to 1.10 moles of dihaloaromatic compound per mole of alkali metal sulphide.

The quantity of organic polar aprotic solvent used in the process may be such that the resulting polymer will be from 5 to 60%, preferably 10 to 50%, by weight of the solvent on completion of the polymerization.

The poly (arylene sulphide) product may be recovered from the resulting reaction mixture by any conventional technique. For example, the solvent may be separated from the reaction mixture by distillation or flashing, to leave the polymeric product which is then washed with water and recovered. Alternatively, the resulting reaction mixture may be filtered to separate the polymeric product from the solvent and then the separated polymer may be washed with water and recovered.

In order to reduce the effect of such disadvantages as discolouration and gelation of the product polymer, it is preferred to employ a recovery procedure which avoids subjecting the polymer to severe thermal conditions, as far as this is practicable. Consequently the above-mentioned alternative is desirable.

A typical example of the poly (arylene sulphide) materials produced according to the present process is a poly (phenylene sulphide) resin:

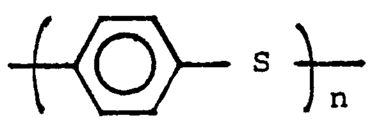

Other examples include:

poly (phenylene sulphide sulphone)

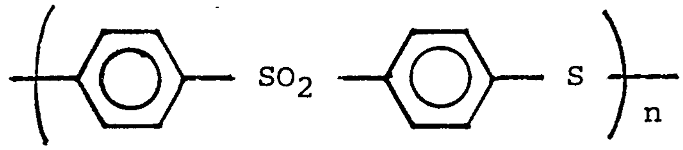

poly (phenylene sulphide ketone)

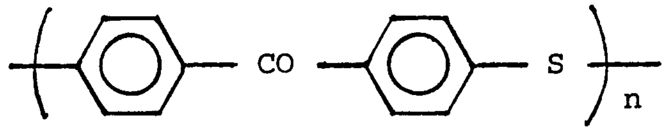

poly (phenylene sulphide ether)

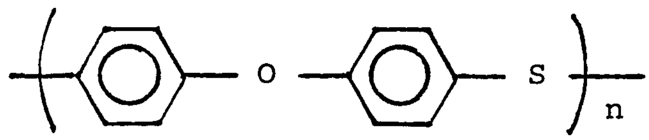

poly (diphenylene sulphide)

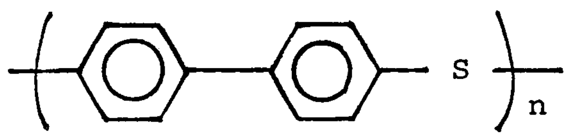

copolymers containing 2 or more of the above-listed repeating units.

The poly (arylene sulphide) products according to the present invention exhibit increased molecular weights while retaining the linearity of their polymeric chains. The present product polymers are thus suitable for use in injection molding and also in extrusion molding of such articles as fibres, films and pipes.

The invention also extends to polyarylene sulphide material characterised by a melt viscosity of at least 100 e.g. at least 150 Pa.S preferably in the range 100 to 350 e.g. 150 to 325 Pa.S.

The poly (arylene sulphide) materials may be mixed with additives before use, for example, reinforcing fillers, such as ceramic fibres (e.g. glass, carbon or alumina fibres), aramide fibres, wholly aromatic polyester fibres, metallic fibres and whiskers (e.g. of potassium titanate); inorganic fillers such as calcium carbonate, mica, talc, silica, barium sulphate, calcium sulphate, kaolin, clay, pyroferrite, bentonite, sericite, zeolite, nepheline syenite, attapulgite, wollastonite, ferrite, calcium silicate, magnesium carbonate, antimony trioxide, zinc oxide, titanium oxide, magnesium oxide, iron oxides, molybdenum disulphide, graphite, gypsum, glass beads, powdered glass, glass balloons, quartz; and organic or inorganic pigments.

Further, conventional additives, for example, plasticizers, mold release agents, silane or titanate coupling agents, lubricants, heat stabilizers, weathering agents, nucleating agents, blowing agents, ion-trapping agents, flame-retardants and flame-proofing aids may be incorporated, if desired.

The poly (arylene sulphide) products of the present invention may be blended with one or more homo polymer and random or block-graft copolymer based on, for example, polyethylene, polybutadiene, polyisoprene, polychloroprene, polystyrene, polybutene, poly -methylstyrene, polyvinyl acetate, polyvinyl chloride, polyacrylates, polymethacrylates, polyacrylonitrile, polyamides (e.g. nylon 6, nylon 66, nylon 610, nylon 12, nylon 46), polyesters (e.g. polyethylene terephthalate, polybutylene terephthalate, polyarylate), polyurethanes, polyacetals, polycarbonates, polyphenylene oxide, polysulphones, polyethersulphones, polyaryl sulphones, polyether ketones, polyether ether ketones, polyimides, polyamide imides, silicone resins, phenoxy resins and fluorine resins.

The invention will be illustrated in more detail with reference to the following examples which are presented only for illustrative purposes and do not restrict the invention in any way.

In the examples, the melt viscosities of the product polyarylene sulphides were measured in a KOHKA type flow tester (with a die having a diameter of 0.5 mm and a length of 2 mm) at 300° C using a load of 10 kg.

## EXAMPLE 1

An autoclave with a 500 ml capacity was chared with 0.60 moles of sodium sulphide ($Na_2S \cdot 2.7H_2O$) and 150 ml of N-methyl-2-pyrrolidone (referred to as "NMP" hereinafter) and heated to 210°C with stirring under a stream of nitrogen so as to distill off 17.7 g water together with 3.5 g NMP. At this stage, 0.011 moles of the sodium sulphide had been decomposed into hydrogen sulphide and thus wasted. The reaction system was cooled down to 170°C and then charged with 0.60 moles of p-dichlorobenzene (referred to as "p-DCB" herein after) and an additional 50 ml of NMP. The system was sealed under a nitrogen stream and raised to a temperature of 220°C for 5 hours so as to allow the reactants to polymerize (the first polymerization). At the end of this period, the system was cooled to ambient temperature. A sample of the reaction mixture in the form of a slurry was subjected to gas chromatography to determine the level of unreacted p-DCB remaining therein. Using the determined value, the conversion was calculated to be 97% in accordance with the above-mentioned equation.

To the reaction system were added 0.60 moles of lithium chloride and 3.00 moles of $H_2O$. The mixture was heated to 150°C with stirring under a nitrogen stream so as to distill off 22.3 g of $H_2O$ together with 9.2 g of NMP. This distillation effected adjustment of the moisture content of the reaction system to a level of 4.0 moles of $H_2O$ per mole of the lithium chloride. Then the mixture was raised to a temperature of 260°C for a further 5 hours so as to permit the polymerization to proceed (the second polymerization). At the end of that period, the reaction system was cooled and the contents were removed. It was found that little sticking or adhesion of the polymeric product to the inner wall of the autoclave had occurred.

The removed polymer slurry was poured into water and repeatedly washed and filtered with 5 l of warm water. The product was washed with methanol once and dried overnight in a heated vacuum drier to give granular poly (p-phenylene sulphide). The yield was 97%. The product had a melt viscosity of 322 Pa.s.

## EXAMPLES 2 to 13

The general procedure of Example 1 was repeated while varying the following parameters:

- charged concentration (moles of $Na_2S$ per litre of NMP),
- ratio of monomers ($Na_2S$/p-DCB molar ratio)
- proportion of lithium halide (molar ratio of lithium halide/$Na_2S$)
- polymerization times (before and after the addition of lithium halide)
- proportion of the water added with lithium halide ($H_2O/Na_2S$ molar ratio)
- moisture content after the addition of lithium chloride ($H_2O$/lithium halide molar ratio).

The reaction parameters and results are summarized in Table 1 (a and b).

## EXAMPLES 14 and 15

The procedure of Example 1 was repeated except that in these Examples the amount of water added to the reaction system was so adjusted as to allow the distillation after the addition of lithium chloride to be omitted. The results are set forth in Table 1.

## EXAMPLE 16

The procedure of Example 1 was repeated employing lithium bromide in place of the lithium chloride. The results are set forth in Table 1.

## Comparative Example 1

This comparative Example follows the method described in USP No. 4,038,263, and is outside the scope of the present invention.

An autoclave with a 500 ml capacity was charged with 0.4 moles of sodium sulphide ($Na_2S \cdot 2.7H_2O$) and 150 ml of NMP and heated to 210 °C with stirring under a stream of nitrogen so as to distill off 11.9 g water together with 2.3 g NMP. At this stage, 0.007 moles of the sodium sulphide had been decomposed into hydrogen sulphide and thus wasted. The reaction system was cooled down to 170 °C and then charged with 0.4 moles of p-DCB, 0.12 moles of lithium chloride and an additional 50 ml of NMP.

The reaction system was sealed under a nitrogen stream and raised to a temperature of 230 °C for 2 hours and a temperature of 265 °C for a further 2 hours so as to allow the polymerization to proceed. Upon completion of the polymerization, the reaction system was cooled and the reaction mixture was withdrawn. A considerable amount of the polymeric product was found to be adhered like scales to the inner wall of the reactor and to the blades of the stirrer. The withdrawn reaction mixture was poured into water and repeatedly washed and filtered with 5 l of warm water. Finally it was washed with methanol and dried overnight in a heated vacuum drier to give a granular polymer at a yield of 95%. The product had a melt viscosity of 70 Pa.s which was much lower than what was observed in the Examples according to the present invention.

## Comparative Example 2

The procedure of Example 1 was repeated except that lithium chloride was not used. The resulting polymer was powdery in appearance. The yield was 94%. The polymer had a melt viscosity of 46 Pa.s which was much lower than what was achieved in the Examples according to the present invention (see Table 1).

## Comparative Examples 3 and 4

The procedure of Example 1 was repeated except that the respective moisture contents in the reaction systems after the addition of lithium chloride were not within the range specified in the present invention. The resulting polymers exhibited melt viscosities much lower than those observed in the Examples according to the invention (see Table 1).

As clearly shown in the above description, according to the present invention, polyarylene sulphides having increased molecular weight may be produced without suffering the problems experienced with the prior art processes. The product polymers are suitable for use not only in injection molding applications but also in extrusion applications, for example, in the production of films, fibres and the like.

Table 1 - a

| | Polymerization condition before addition of Lithium Halide | | | | | |
|---|---|---|---|---|---|---|
| | Charged $Na_2S$ moles/ℓ | $Na_2S$/p-DCB molar ratio | $H_2O/Na_2S$ molar ratio | Reaction Temp. (°C) | Reaction Time (hrs.) | Conversion (%) |
| Exp. 1 | 3.0 | 0.98 | 1.1 | 220 | 5 | 97 |
| " 2 | 2.0 | " | 1.2 | " | 4 | 94 |
| " 3 | " | " | 1.1 | " | 3 | 90 |
| " 4 | " | " | 1.0 | " | 5 | 97 |
| " 5 | 3.0 | 0.99 | 1.2 | " | " | 96 |
| " 6 | " | " | " | " | " | " |
| " 7 | " | 0.98 | 1.3 | " | " | " |
| " 8 | " | " | 1.2 | " | " | 97 |
| " 9 | " | " | 1.1 | " | " | " |
| " 10 | " | " | 1.2 | " | " | 96 |
| " 11 | " | " | 1.1 | " | " | " |
| 12 | " | " | 1.2 | " | " | " |
| " 13 | " | " | 1.1 | " | " | " |
| " 14 | " | 1.01 | " | " | " | 97 |

Table 1-a (cont'd)

| | Polymerization condition before addition of Lithium Halide | | | | | |
|---|---|---|---|---|---|---|
| | Charged $Na_2S$ moles/ℓ | $Na_2S$/p-DCB molar ratio | $H_2O/Na_2S$ molar ratio | Reaction Temp. (°C) | Reaction Time (hrs.) | Conversion (%) |
| " 15 | 3.0 | 1.01 | 1.2 | 220 | 5 | 96 |
| " 16 | " | 0.98 | 1.1 | " | " | " |
| C. Exp.2 | 2.0 | " | " | " | " | 95 |
| " 3 | 3.0 | " | " | " | " | 97 |
| " 4 | 2.0 | " | " | " | " | 98 |
| " 5 | 3.0 | " | 1.2 | " | 1 | 66 |
| " 6 | " | " | " | 260 | 2 | 99 |

Table 1 - b

| | Additive and proportion thereof | | | After Addition of Lithium Halide | | | | Yield | Melt viscosity |
|---|---|---|---|---|---|---|---|---|---|
| | Lithium halide | Li-halide/ $Na_2S$ molar ratio | $H_2O/Na_2S$ molar ratio | $H_2O/Na_2S$ molar ratio | $H_2O$/Li-halide molar ratio | Reaction Temp. (°C) | Reaction Time (hrs.) | (%) | (Pa.s) |
| Exp. 1 | LiCl | 1.0 | 5.0 | 4.0 | 4.0 | 260 | 5 | 97 | 322 |
| " 2 | " | 0.5 | 2.0 | 1.6 | 3.2 | " | " | 95 | 260 |
| " 3 | " | " | " | " | " | " | " | 93 | 170 |
| " 4 | " | " | 2.5 | 2.3 | 4.6 | " | " | " | 160 |
| " 5 | " | " | " | 1.8 | 3.6 | " | " | 94 | 220 |
| " 6 | " | 0.4 | 2.0 | 1.7 | 3.4 | " | " | " | 198 |
| " 7 | " | 0.5 | 2.5 | 2.1 | 4.2 | " | " | 91 | 323 |
| " 8 | " | " | " | 2.2 | 4.4 | " | 1 | " | 150 |
| " 9 | " | " | " | " | " | " | 3 | 90 | 263 |
| " 10 | " | " | " | " | " | " | 10 | " | 282 |
| " 11 | " | " | " | 2.9 | 5.8 | " | 5 | 91 | 278 |

Table 1 - b (cont'd)

| | Additive and proportion thereof | | | After Addition of Lithium Halide | | | | Yield | Melt viscosity |
|---|---|---|---|---|---|---|---|---|---|
| | Lithium halide | Li-halide/ $Na_2S$ molar ratio | $H_2O/Na_2S$ molar ratio | $H_2O/Na_2S$ molar ratio | $H_2O$/Li-halide molar ratio | Reaction Temp. (°C) | Reaction Time (hrs.) | (%) | (Pa.s) |
| Exp. 12 | LiCl | 0.5 | 2.5 | 2.5 | 5.0 | 260 | 5 | 92 | 315 |
| " 13 | " | " | 2.5 | 1.4 | 2.8 | " | " | 90 | 160 |
| " 14 | " | " | 1.0 | 2.1 | 4.2 | " | " | 96 | 209 |
| " 15 | " | " | 2.0 | 3.2 | 6.4 | " | " | 91 | 157 |
| " 16 | LiBr | " | 2.5 | 2.0 | 4.0 | " | " | 94 | 194 |
| C. Exp 2 | - | 0.0 | 4.5 | 5.6 | - | " | " | " | 46 |
| " 3 | LiCl | 1.0 | 0.0 | 1.1 | 1.1 | " | " | 95 | 73 |
| " 4 | " | 0.5 | 5.0 | 5.0 | 10.0 | " | " | 91 | 62 |
| " 5 | " | " | 2.5 | 2.9 | 5.8 | " | " | 93 | 58 |
| " 6 | " | " | " | 2.1 | 4.2 | " | " | 92 | 51 |

## Claims

1. A process for producing a poly (arylene sulphide) comprising reacting a dihaloaromatic compound with an alkali metal sulphide in a polar aprotic solvent, wherein when a conversion of from 70 to 98 mole % of the dihaloaromatic compound has been achieved in the reaction system, a lithium halide is added in a proportion of from 0.1 to 3 moles per mole of the originally added dihaloaromatic compound, the moisture content of the reaction system being from 2 to 8 moles of $H_2O$ per mole of lithium halide, the reaction then being allowed to proceed.

2. A process as claimed in Claim 1 in which after the addition of the lithium halide the moisture content of the reaction system is regulated to a level of 2 to 8 moles of $H_2O$ per mole of lithium halide.

3. A process as claimed in Claim 1, in which the lithium halide is a chloride, bromide or iodide or a mixture thereof.

4. A process as claimed in any one of Claims 1 to 3 in which the alkali metal sulphide is a lithium, sodium, potassium, rubidium or cesium sulphide or a mixture thereof.

5. A process as claimed in any one of Claims 1 to 4 in which the dihaloaromatic compound is an o-, m- or p-dichlorobenzene, a p-dibromobenzene, a p-diiodo benzene, dichloro- or dibromo-naphthalene, a dichloro diphenyl sulphone, a dichlorobenzophenone, a dichlorodiphenyl ether, a dichlorodiphenyl sulphide, a dichlorodiphenyl, a dibromodiphenyl, or a dichlorodiphenyl sulphoxide or a mixture thereof.

6. A process as claimed in any one of Claims 1 to 5 in which the dihaloaromatic compound is employed in conjunction with a polyhaloaromatic compound which is present in an amount such that the linear property of the product polymer is not degraded to an unacceptable extent.

7. A process as claimed in any one of Claims 1 to 6 in which the solvent comprises N,N-dimethyl acetamide, N,N-dimethyl formamide, hexamethyl phosphoric triamide, N-methyl-ε-caprolactam, N-ethyl-2-pyrrolidone, N-methyl-2-pyrrolidone, 1,3-dimethyl imidazolidinone, dimethyl sulphoxide, sulpholane or tetramethylurea or a mixture thereof.

8. A process as claimed in any one of Claims 1 to 7 in which the reaction is conducted at a temperature in the range of 200 to 300 °C for a period of from 0.5 to 20 hours.

9. A process as claimed in any one of Claims 1 to 8 in which the molar ratio of the alkali metal halide to the dihaloaromatic compound is in the range of from 1.00:0.95 to 1.00:1.10.

10. A poly (arylene sulphide) resin produced by a process as claimed in any one of Claims 1 to 9.

11. A polyarylene sulphide material characterised by a melt viscosity of at least 100 Pa.s.